(19) Europäisches Patentamt
European Patent Office
Office européen des brevets

(11) Publication number: **0 420 168 A2**

# (12) EUROPEAN PATENT APPLICATION

(21) Application number: **90118439.0**

(22) Date of filing: **26.09.90**

(51) Int. Cl.[5]: **B29C 59/00**, G02B 6/38, B24B 41/00

(30) Priority: **28.09.89 IT 2186689**

(43) Date of publication of application:
**03.04.91 Bulletin 91/14**

(84) Designated Contracting States:
**DE ES FR GB**

(71) Applicant: **SOCIETA CAVI PIRELLI S.p.A.**
**Piazzale Cadorna, 5**
**I-20123 Milan(IT)**

(72) Inventor: **Boero, Paolo**
**Via Parini, 5/A**
**I.Milan(IT)**
Inventor: **Bortolin, Bruno**
**Via Cantore, 23**
**I-Cinisello Balsamo (MI)(IT)**

(74) Representative: **Giannesi, Pier Giovanni et al**
**Pirelli S.p.A. Direzione Brevetti Piazzale Cadorna, 5**
**I-20123 Milano(IT)**

## (54) Process for making a detachable connecting group for ribbon optical fibres and connecting group obtained thereby.

(57) A process for making interchangeable connectors (1, 2) for cables consisting of ribbon-joined optical fibres (3, 4), involves the manufacture, by mechanical working, of a punch (10) provided with several parallel ridges (12, 13) of dihedral form, symmetrically disposed relative to a middle plane passing through a longitudinal axis (a) of the punch, the mechanical working including at least a grinding step for the parallel ridges (12, 13) in which corresponding ridges are worked in succession by rotating the punch (10) about its longitudinal axis (a); several plates (5) of metallic material having respective grooves (8, 6) corresponding to the the punch ridges (12, 13) are then pressed by plastic deformation; the fiber ends of an optical fiber ribbon (3, 4) are next clamped between two plates (5), at least one of which is manufactured by means of the punch (10), and fastened in place by an adhesive material; afterwards the outlet surface of the fibres (3, 4) is ground and at least an alignment plug (9) is introduced into a corresponding hole defined by at least a groove (8) of a grooved plate (5). The invention also relates to a punch (10) made following the described process and a connector (1, 2) for ribbon-joined optical fibres (3,4) obtained by the same process.

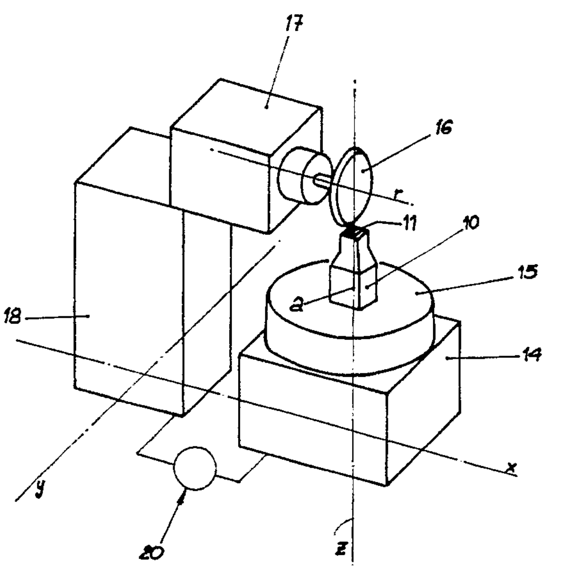


Fig. 4

EP 0 420 168 A2

# PROCESS FOR MAKING A DETACHABLE CONNECTING GROUP FOR RIBBON OPTICAL FIBRES AND CONNECTING GROUP OBTAINED THEREBY

The present invention relates to a connecting group for ribbon optical fibres and to a process for making the same.

In order to connect two optical cables of the "ribbon type" to each other, that is cables in which several optical fibres are disposed parallelly to each other and united together by a single plastic coating so as to form a ribbon and one or more ribbons are joined to form the cable, it is necessary to arrange each optical fiber of a ribbon forming one cable in alignment with the corresponding fiber of a ribbon forming the other cable, so as to allow light to pass from one fiber to the other while minimising dispersions and attenuations of the transmitted signal resulting from faults in the fiber alignment.

For the purpose of achieving such alignment simultaneously in all fibres forming the ribbon, the end of the ribbon itself is conveniently fitted into a rigid body, named connector, which keeps the fibres in a geometrically definite position; two connectors forming a pair are therefore arranged and held in a confronting relationship and aligned in order to form a connecting group, so that the respective fibres can take the correct position for forming the optical connection.

Due to the requirements for a connection in which the best alignment between all the fibres of the ribbon is achieved to limit the attenuation of the light signal to the most when passing through the connection, it is necessary to dictate very reduced tolerances as regards possible cociality faults between the fibres of each interconnected pair and, as a result, very reduced tolerances in the sizes and positions of the housings for the fibres themselves in the connectors; in particular, by way of example, for connecting ribbons made of single-mode fibres in which the diameter $\varnothing$ of the cladding of each fiber is 125 $\mu$m and the mode diameter is equal to 9.5 $\mu$m, the position fault of the axis of a fiber in a connector with respect to the axis of the corresponding fiber in the faced connector indicatively must not be higher than one $\mu$m, so that in most cases the signal attenuation at the connection may be lower than 1 dB which is deemed to be the maximum permissible loss value in the connection.

Making connectors having these acuracy requirements is quite a delicate operation, taking particularly into account the fact that it is necessary to produce a great number of connectors to be matched, while ensuring the same qualitative alignment value to all of them.

For the purpose connectors are known in which the opitcal fibres are housed within the grooves of a plate made of crystalline material which are obtained during several steps by localised etching, at positions defined by protection templates.

Therefore, in order to achieve the very high accuracy in size required for the housing grooves in a plate, the position and shape of which directly states the axis position of the fiber contained therein, particularly delicate and expensive working processes are required in producing said plates.

Grooved plates can also be made using a metallic material by cold plastic deformation or coining; this working ensures a precise reproduction of the features of the punch used and therefore the achievement of the desired accuracy level is bound to the manufacture accuracy of the punch itself.

However, common mechanical precision workings such as grinding do not ensure the respect of the dictated reduced tolerances, while on the other hand workings checked by optical instruments and the like, adapted to allow size differences beyond the range of the required precision to be detected are very expensive if applied to the whole workpiece working.

Therefore the present invention aims at providing a process for making a punch having size accuracy and tolerances adapted for use in forming connector plates for ribbon-joined optical fibres by cold plastic deformation, which process involves relatively reduced costs as far as mechanical workings are concerned.

It is an object of the present invention a process for making interchangeable connectors for cables consisting of ribbon-joined optical fibres, each connector being mounted at one end of a respective optical fiber ribbon formed of at least two parallel optical fibres enclosed in a single outer coating, and being provided with a coupling face in contact with the corresponding face of another connector, the fibres being in alignment with each other and on which coupling face the end of the optical fibres of the respective ribbon come out, characterised in that a punch having several parallel ridges of dihedral form is manufactured by mechanical working, which ridges are symmetrically disposed relative to a middle plane passing through a longitudinal axis of the punch, the mechanical working comprising at least a grinding step for the parallel ridges in which corresponding ridges are worked in succession by rotating the punch about its longitudinal axis; several plates of metallic material having respective grooves corresponding the the punch ridges are cold pressed by plastic deformation; the fibres of an optical fiber ribbon are clamped between two plates, at least one of which is manufactured by means of the punch; a hardening adhesive material is inserted between the plates; the outlet surface of the fibres is ground; and at least an alignment plug is introduced into a corresponding hole defined by at least a groove of a grooved plate.

In greater detail the punch is made by first forming, by medium precision mechanical working, a partially-formed impression surface having several raised ridges in register with the desired position for the grooved plate grooves, then fastening the punch itself to the rotatable spindle of an angular precision index head mounted on one slide horizontally movable along a rectilinear guide perpendicular to a translation guide for the displacement of a second slide carrying a shaped-disc grinding machine, and thereafter performing the following steps:

- grinding one side of a punch ridge by a first displacement of the slide carrying the grinding machine;
- rotating the angular index head carrying the punch through 180°, while keeping its position steady along the translation guide and then, by a translation of the slide carrying the grinding machine, grinding the side of the punch ridge symmetrical to the preceding one with respect to a plane passing through the axis of rotation of the angular index head;
- translating the slide carrying the angular index head towards the grinding machine by a predetermined working feed amount and repeating the preceding workings until the nominal distance of the two corresponding ridge sides of the punch has been achieved; - repeating the same operations for one side of all the punch ridges;
- detecting, through optical detection means, the position of one ridge side and grinding the opposite ridge side at a predetermined distance with respect to the detected side;
- grinding the corresponding side of the symmetrical ridge with respect to the plane passing through the axis of rotation of the index head while keeping the slide carrying the index head stationary and rotating the index head through 180°;
- repeating the optical detection and grinding operations for the remaining sides of the the punch ridges.

A further object of the present invention is to provide a punch for making metal plates by plastic deformation for interchangeable connectors for cables consisting of ribbon-joined optical fibres, characterised in that it has an impression surface having several parallel ridges designed to form corresponding grooves in the metal plates formed by said punch, which grooves are adapted to house one or more optical fibres and at least an alignment plug, wherein the ridges are symmetrical to a plane passing through the longitudinal axis of the punch, manufactured in accordance with the above described process.

It is still a further object of the present invention an interchangeable connector for cables consisting of ribbon-joined optical fibres, characterised in that it comprises at least a grooved plate wherein the grooves are adapted to house one or more optical fibres and at least an alignment plug and are symmetrical to a middle plane of the plate, the plate being formed by plastic deformation with a punch manufactured by adopting the above described process.

Further details can be drawn from the following description of a preferred embodiment of the invention, made with reference to the accompanying drawings, in which:

- Fig. 1 is an exploded view of a pair of connectors for ribbon-joined optical fibres;
- Fig. 2 is a side view of a punch to make grooved plates for the connectors shown in Fig. 1;
- Fig. 3 is a diagram showing the process for the formation of the grooved plates by the use of the punch viewed in Fig. 2;
- Fig. 4 is a diagram showing the arrangement of the apparatus to make the punch;
- Fig. 5 is an enlarged side view showing the profile of the impression surface of the punch;
- Figs. 6 to 9 are diagrams showing how the punch profile is worked.

As shown in Fig. 1, the connection of two optical fiber ribbons is carried out by means of a pair of connectors 1, 2, integral to the corresponding ends of optical fiber ribbons 3, 4, arranged in faced relationship.

Each connector, shown in an exploded view in the figure, consists of a pair of plates 5, at least one of which is provided with longitudinal grooves 6, inside which the ends of the optical fibres belonging to ribbons 3, 4 are arranged after being stripped, over a length thereof, of their protection coating made of plastic material, so that their cladding is exposed; a recess 7 formed at the end of the plate allows the end portion of the plastics coating greater in thickness to be accommodated.

In addition, a pair of further longitudinal grooves 8 receives the plugs 9, preferably one for each connector, designed to enter the corresponding grooves of the other connector and through which the connectors are matched, the alignment condition of the connection being also determined by them.

In order to achieve the correct alignment of the fibres with the requested accuracy so as to reduce the attenuation of the signal in the connection as much as possible (at least below 1 dB), the plate grooves determining the position of the fibres and the alignment plugs are made by plastic deformation of the plate material by cold pressing or coining.

As shown in Figs. 2 and 3 plates 5 are pressed or coined by the use of a punch 10 having a working area 11 and therefore they appear strictly identical with one another; in a subsequent step the formation of the recess 7 takes place and for it tolerances of normal mechanical working are allowed.

In order to create the working area 11 of punch 10 exhibiting, as shown in Fig. 5, a pair of ridges 12 designed to form grooves 8 and several ridges 13 designed to form grooves 6, a precision grinding is carried out which ensures the symmetry of the punch itself with a plane passing through its longitudinal axis a: the foregoing means that distances $b_1$ and $b_2$, $c_1$ and $c_2$ and $d_1$ and $d_2$ are strictly identical with one another, that is to say that the tolerance concerning the equality between said values is within very small limits. The same considerations as before are valid as regards the opening angles $\alpha_1$ and $\alpha_2$, $\beta_1$ and $\beta_2$ of the dihedrals forming the ridges 12 and 13 which are respectively equal to each other with the same accuracy; preferably angles $\alpha$ and $\beta$ are identical.

For the purpose provision is made for the use of an arrangement of machines of the type shown in Fig. 4, comprising a slide 14 movable by a translation movement in the horizontal plane according to the direction shown by axis x in the figure, carrying an angular index head 15 having a vertical rotation axis z.

The punch 10 is fastened to the work spindle of the index head 15, its axis a being coincident with the axis of rotation z of the index head.

A grinding wheel 16 having an angled peripheral profile is supported by a grinding head 17, the axis of rotation r of which is horizontal and parallel to axis x; the grinding head 17 is carried by a slide 18 movable in the horizontal plane along axis y, perpendicular to axis x.

The exactitude of the lying planes of axes x, y, z, a, r must be complied with according to the tolerances typical of precision mechanics.

Punch 10 is first worked using ordinary machine tools of the medium precision type that is exhibiting a precision in the range of ± 1/10 of millimetre, thus forming the profile 19 shown in chain dot line in Fig. 6 on its working area 11, which profile substantially corresponds to the ultimate desired profile shown in solid line in the same figure, leaving a machining allowance to be removed by grinding, which has been magnified in the figure for the sake of clarity.

The quantity of material to be removed by grinding will therefore be within reduced limits which will bring about unperceivable values of wear of the grinding wheel 16 during working.

Next the punch is mounted on the index head 15 so that its axis is coincident with the axis of rotation z of the index head and the ridges of the profile 19 are parallel to the axis of horizontal translation y of the grinding head 17.

A comparator 20 adapted to ensure a measurement precision in the range of ± 1/100 of millimetre is associated with the slide 14 movable along axis x and carrying the angular index head 15 and executes the measurement of the translation thereof relative to the slide 18 carrying the grinding head 17.

when starting working the slide 14 is disposed so that the action line of the profile apex of the grinding wheel 16 is brought into register with a side edge 21 of the punch, as shown in chain dot line in figure 6 by reference 16′, and comparator 20 is set to zero at this position.

Then the grinding of the working area 11 along the edge 21 is scarried out while the slide 18 performs an alternate translation along axis y; when the first pass is over, the index head 15 is rotated through 180° and the operation is repeated along the opposite edge 22 of the punch while keeping the same position of the index head 15 along axis x.

The operation is repeated several times by rotating the index head at each pass and moving forward the slide 18 each time towards the punch as far as comparator 20 detects that the nominal distance of the side of ridges 12 has been reached; in this way, as shown in Figs. 7, 8, the corresponding outer sides 12a of the ridges 12 are worked under conditions of complete symmetry with respect to a plane passing through the axis a of the punch which is coincident with the axis of rotation of the index head.

During the whole operation the distance of the working area of the grinding wheel 16 from axis z is kept constant.

The position of surfaces 12a with respect to their nominal planned distance is given by the exactness of comparator 20 without further precision requirements.

Subsequently by the same procedure, as shown in Fig. 8, the outer sides 13a of ridges 13 are worked symmetrically relative to axis a thereby obtaining the outer sides of ridges 12 and 13 in which the distance accuracy is given by the available equipments and therefore the tolerance can even be higher than the permitted values for achieving the alignment between the fibres of two faced connectors, but at all events said values are strictly symmetrical with respect to the axis a itself.

Through highly precise optical alignment means the grinding wheel 16 is then arranged so that it can perform the grinding of the surface 12b of ridges 12 while respecting, with reference to surface 12a, the correct outline of the ridge itself, the index head 15 being rotated through 180° after each pass. As a result both ridges 12 have a precise profile as will be allowed by the optical checking carried out and equal to each other by virtue of the above rotation; in an identical manner, that is by optically aligning the grinding wheel relative to a side 13a which has been already ground, of each pair of ridges 13 symmetrical with axis a, sides 13b of all ridges 13 are worked thereby completing the working area of the punch.

Then the impression surface of the punch can be submitted to a surface treatment increasing the hardness thereof so as to prolong its lifetime in use.

By the use of a punch made as described the connector plates 5 are quite identical with one another as regards positions and sizes of grooves 6 and 8 and can therefore be freely matched, ensuring high accuracy levels in the alignment between the optical fibres housed in the grooves themselves.

Many modifications can be made without departing from the scope of the present invention taken in its general features.

## Claims

1. A process for making interchangeable connectors (1, 2) for cables consisting of ribbon-joined optical fibres, each connector (1, 2) being mounted at one end of a respective optical fiber ribbon (3, 4) formed of at least two parallel optical fibres enclosed in a single outer coating, and being provided with a coupling face in contact with the corresponding face of another connector, the fibres being in alignment with each other and on which coupling face the ends of the optical fibres of the respective ribbon come out, characterised in that a punch (10) having several parallel ridges (12, 13) of dihedral form is made, which ridges are symmetrically disposed relative to a middle plane passing through a longitudinal axis (a) of the punch (10), the mechanical working comprising at least a grinding step for the parallel ridges (12, 13) in which corresponding ridges are worked in succession by rotating the punch about its longitudinal axis; several plates (5) of metallic material having respective grooves (8, 6) corresponding to the punch ridges (12, 13) are cold pressed by plastic deformation; the fibres of an optical fiber ribbon (3, 4) are clamped between two plates (5), at least one of which is manufactured by means of the punch (10); a hardening adhesive material is inserted between the plates (5); the outlet surface of the fibres is ground; and at least an alignment plug (9) is introduced into a corresponding hole defined by at least a groove (8) of a grooved plate (5).

2. A process for making interchangeable connectors (1, 2) for cables consisting of ribbon-joined optical fibres according to claim 1, characterised in that the punch (10) is made by first forming, by medium precision mechanical working, a partially-formed impression surface (19) having several raised ridges (12, 13) in register with the desired position for the grooved plate grooves (8, 6), then fastening the punch itself to the rotatable spindle of an angular precision index head (15) mounted on one slide (14) horizontally movable along a rectilinear guide perpendicular to a translation guide for the displacement of a second slide (18) carrying a shaped-disc (16) grinding machine (17), and thereafter performing the following steps:
- grinding one side (12a) of a punch ridge (12) by a first displacement of the slide (18) carrying the grinding machine (17); - rotating the angular index head (15) carrying the punch (10) through 180°, while keeping its position steady along the translation guide and then, by a translation of the slide (18) carrying the grinding machine (17), grinding the side (12a) of the punch ridge (12) symmetrical to the preceding one with respect to a plane passing through the axis of rotation (z) of the angular index head (15);
- translating the slide (14) carrying the angular index head (15) towards the grinding machine (17) by a predetermined working feed amount and repeating the preceding workings until the nominal distance of the two corresponding ridge sides (12a) of the punch (10) has been achieved;
- repeating the same operations for one side (13a) of all the punch ridges (13);
- detecting, through optical detection means, the position of one ridge side (12a) and grinding the opposite ridge side (12b) at a predetermined distance with respect to the detected side;
- grinding the corresponding side (12b) of the symmetrical ridge (12) with respect to the plane passing through the axis of rotation (z) of the index head (15) while keeping the slide (14) carrying the index head stationary and rotating the index head (15) through 180°;
- repeating the optical detection and grinding operations for the remaining sides (13b) of the the punch ridges (13).

3, A punch (10) for making metal plates (5) by plastic deformation for interchangeable connectors (1, 2) for cables consisting of ribbon-joined optical fibres (3, 4), characterised in that it has an impression surface (11) having several parallel ridges (12, 13) designed to form corresponding grooves (8, 6) in the metal plates (5) formed by said punch, which grooves are adapted to house one or more optical fibres (3, 4) and at least an alignment plug (9), wherein the ridges (12, 13) are symmetrical to a plane passing through the longitudinal axis (a) of the punch (10), manufactured in accordance with the process of claim 1 or 2.

4. An interchangeable connector (1, 2) for cables consisting of ribbon-joined optical fibres (3, 4), characterised in that it comprises at least a grooved plate (5) wherein the grooves (8, 6) are adapted to house one or more optical fibres (3, 4) and at least an alignment plug (9) and are symmetrical to a middle plane of the plate (5), the plate being formed by plastic deformation with a punch (10) manufactured by adopting the process of claim 1 or 2.

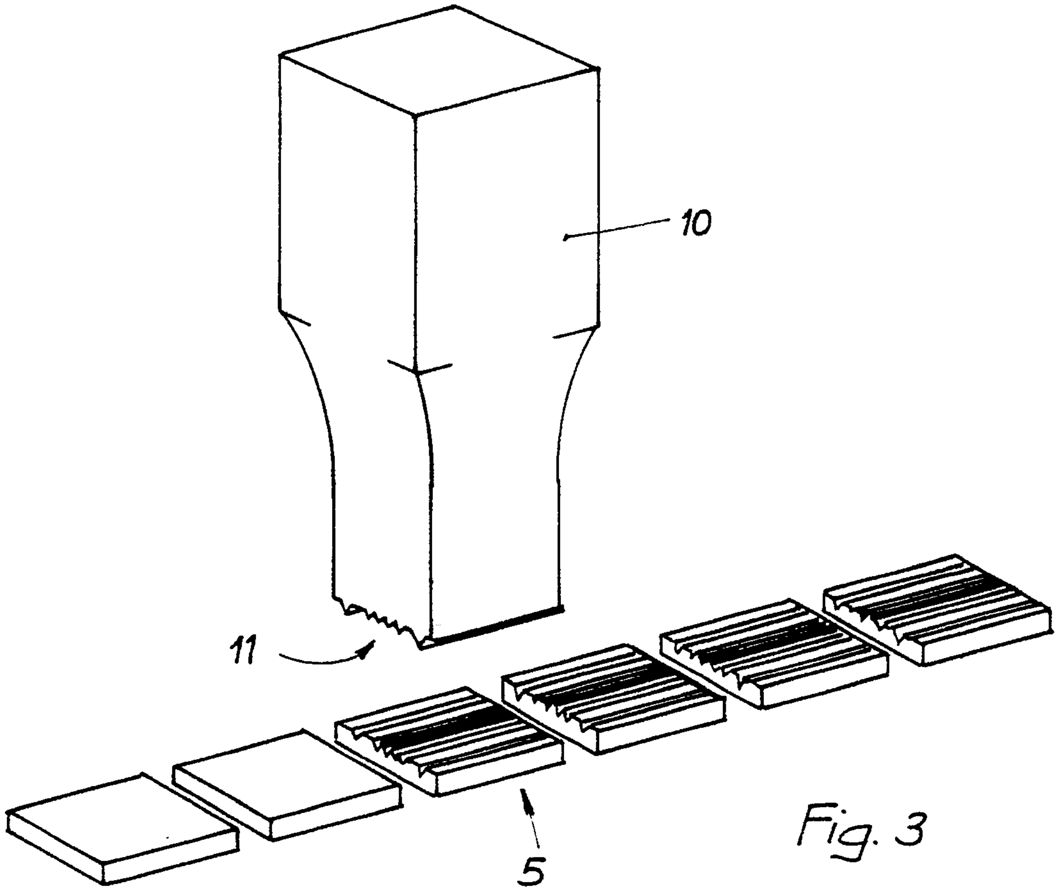


Fig. 3

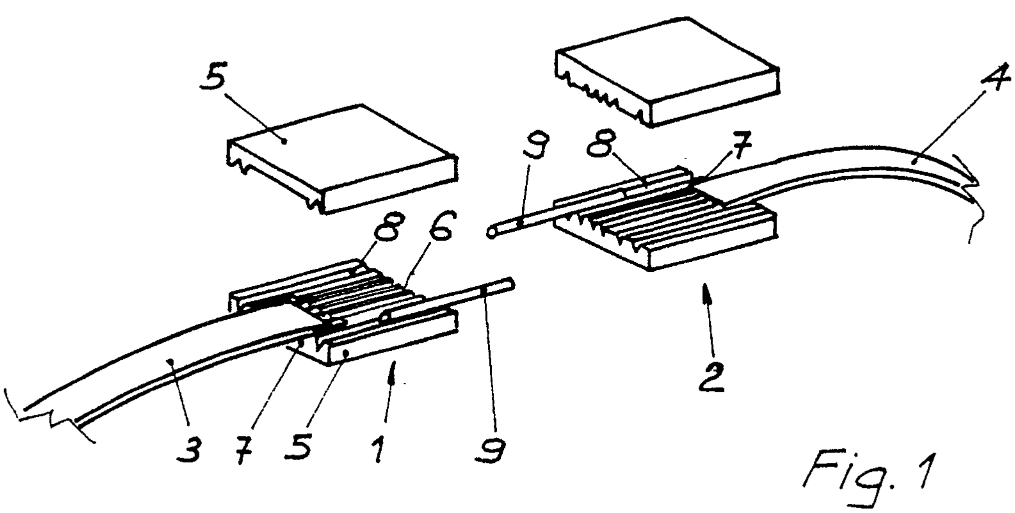


Fig. 1

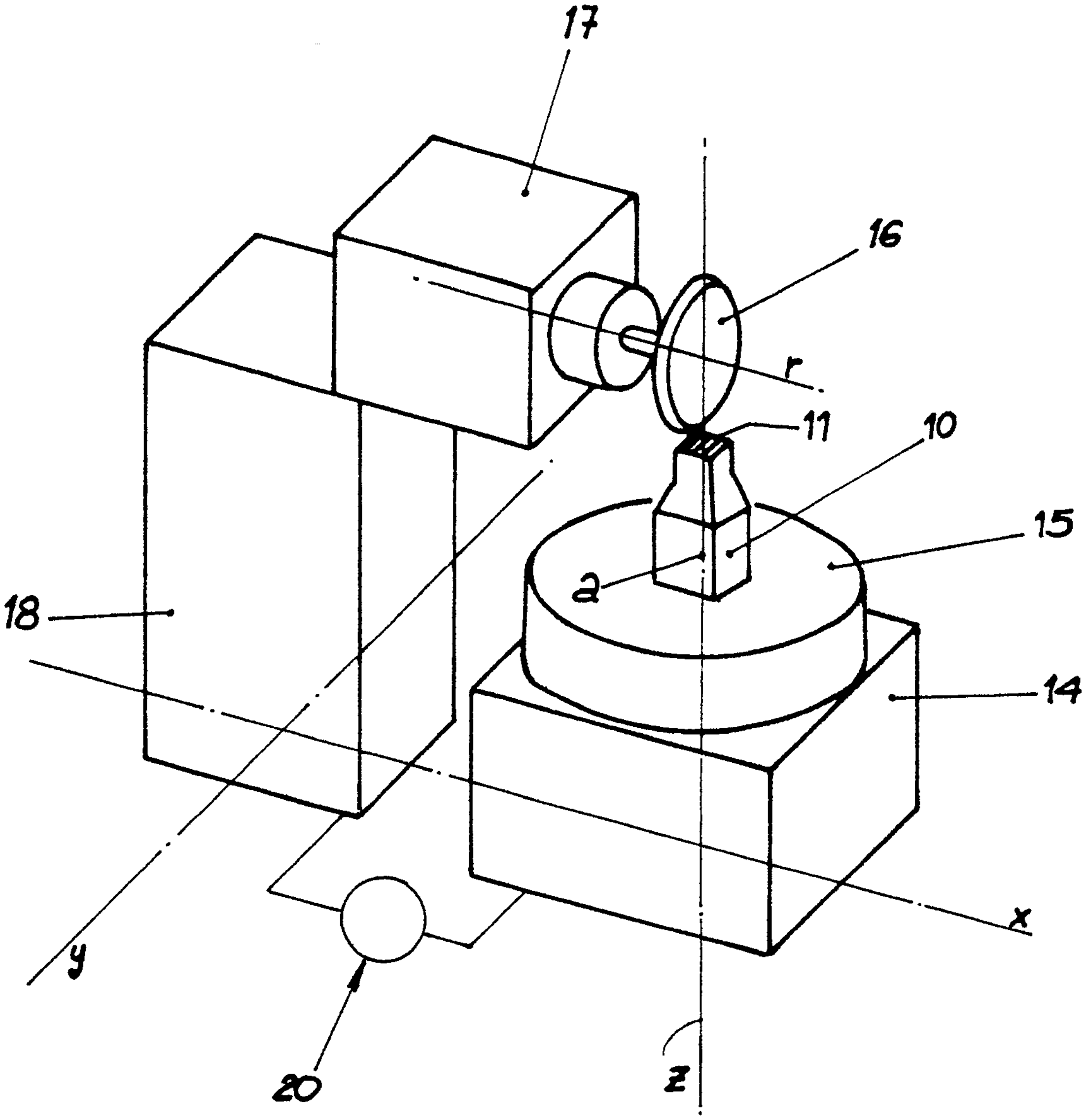


Fig. 4

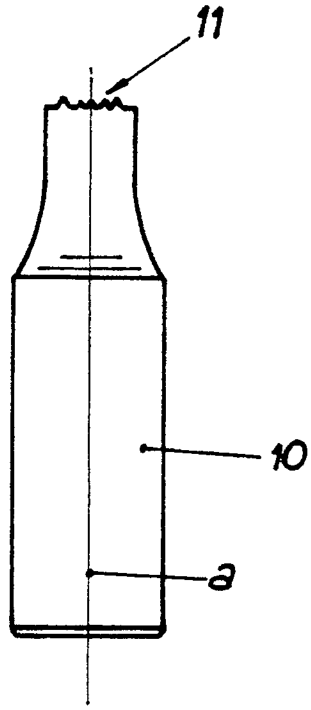


Fig.2

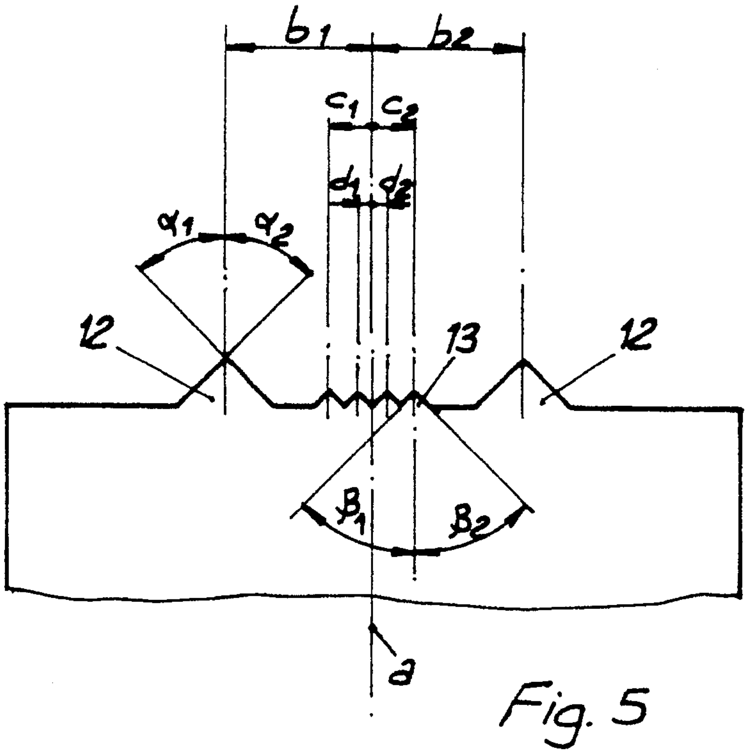


Fig. 5

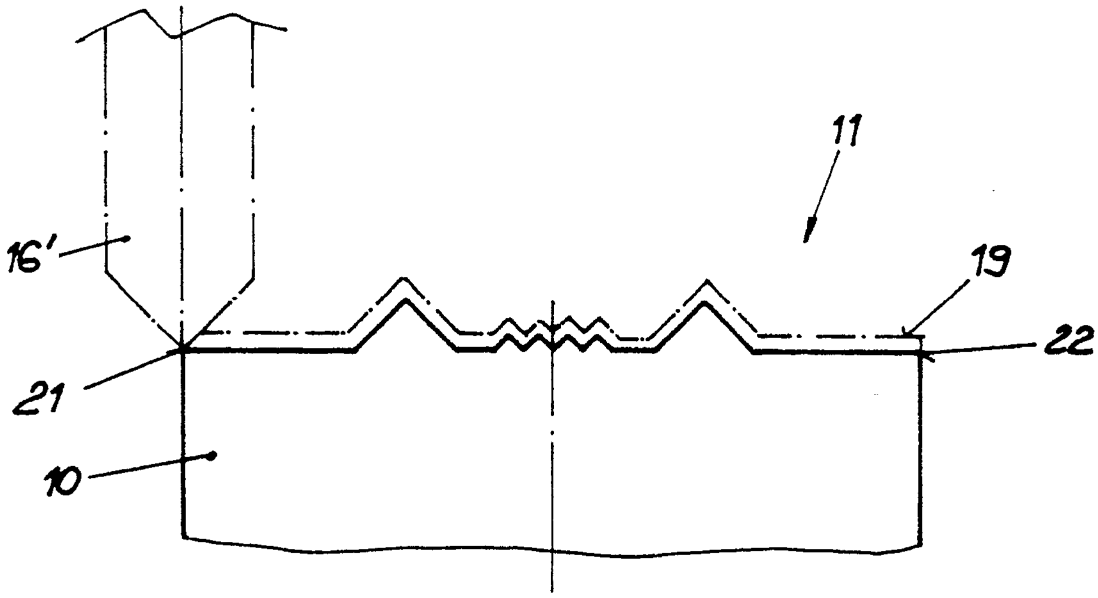


Fig.6

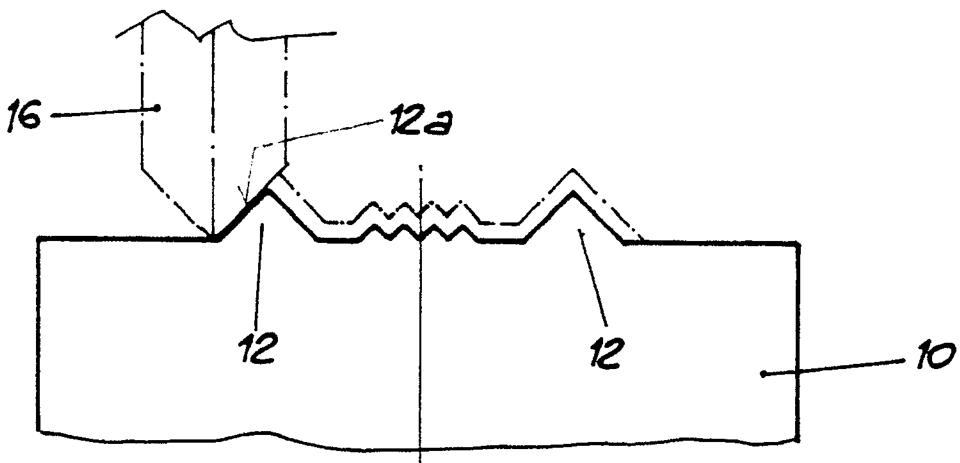


Fig. 7

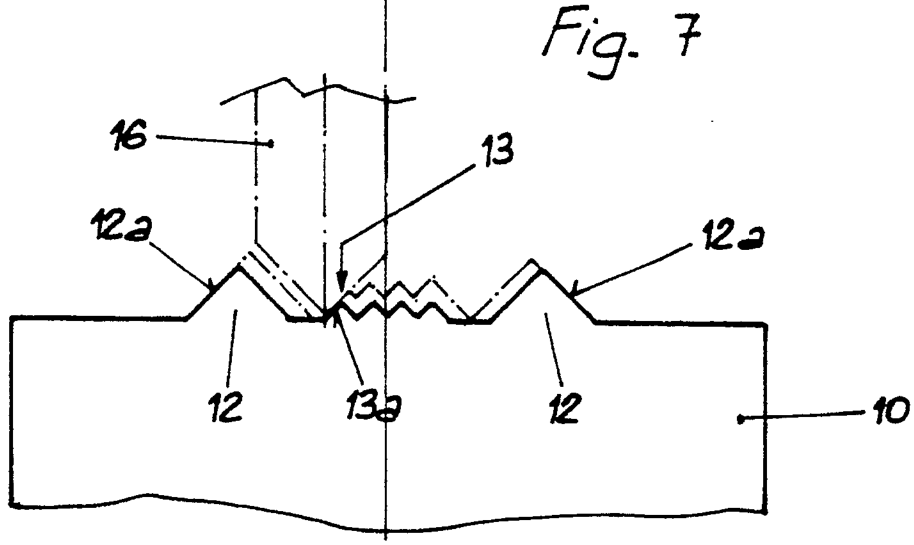


Fig. 8

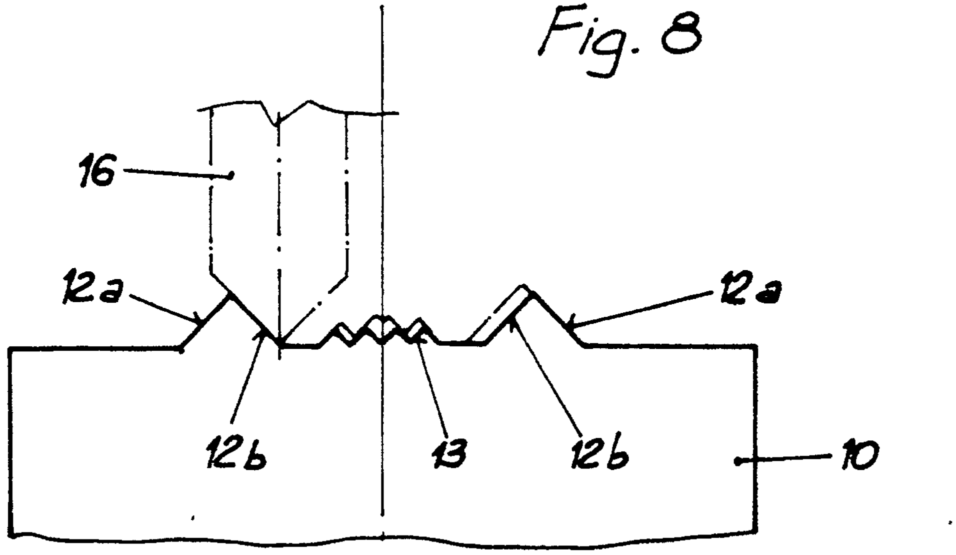


Fig. 9